Europäisches Patentamt

European Patent Office

Office européen des brevets

(11) Publication number: **0 439 914 A1**

# EUROPEAN PATENT APPLICATION

(21) Application number: 90312549.0

(51) Int. Cl.⁵: **B60P 1/02**, B60P 3/025

(22) Date of filing: **19.11.90**

(30) Priority: **29.01.90 GB 9001965**
**01.05.90 GB 9009737**

(43) Date of publication of application:
**07.08.91 Bulletin 91/32**

(84) Designated Contracting States:
**AT BE CH DE ES FR GR IT LI LU NL SE**

(71) Applicant: **Ratcliffe, Gordon Wood**
**5, Cefn Parc**
**Skewen, West Glamorgan(GB)**

Applicant: **Ratcliffe, Gordon Paul**
**6, Curlew Close, Learos Park**
**Rhyddings, Neath, West Glamorgan(GB)**

(72) Inventor: **Ratcliffe, Gordon Wood**
**5, Cefn Parc**
**Skewen, West Glamorgan(GB)**
Inventor: **Ratcliffe, Gordon Paul**
**6, Curlew Close, Learos Park**
**Rhyddings, Neath, West Glamorgan(GB)**

(74) Representative: **Austin, Hedley William et al**
**Urquhart-Dykes & Lord Alexandra House 1**
**Alexandra Road**
**Swansea West Glamorgan SA1 5ED(GB)**

(54) **Transportable temporary accommodation units.**

(57) A transportable temporary accomodation unit has a box-like body structure mounted on pivotal suspension members connected to a wheeled axle (8). Remotely operable locking means enable locking members to be selectively engaged with or disengaged from cooperating brackets (21) such that the vehicle may either be supported on its wheels, or rest with the underside of the body structure on the ground surface, in which case the pivotally movable wheeled axle (8) and suspension members are enclosed within the body structure. The trailer may be provided with one or more hydraulic rams (11) to raise and lower the body structure between the two support positions.

EP 0 439 914 A1

FIG 5

## TRANSPORTABLE TEMPORARY ACCOMODATION UNITS

The present invention relates to transportable temporary accomodation units, and, in particular, such units of the nature of trailers which can be towed by road vehicles to sites where they can be used for purposes such as stores, temporary offices, canteens, mobile exhibitions or the like.

A towable accomodation unit of the type mentioned above is disclosed in our U.K. Patent Application 2204537 and comprises a boxlike body which is towable on a pair of wheels mounted on an axle. The axle is mounted on two leaf springs, each of which is pivotally secured to the chassis of the body at one end, the other end being releasably located by means of a respective removable pin in a channel section bracket provided on the chassis.

In use, the body is raised by hydraulic rams attached to the chassis adjacent the wheels. The pins are then removed from the channel section brackets, before retracting the hydraulic rams causing the body to be lowered until its lower edges rest upon the ground with the wheels, axle, springs and rams within the body. The wheel/leaf spring/axle assembly pivots on the leaf springs during lowering as the wheels come into contact with the ground. In order to transport the unit, the process is reversed. The rams are extended, raising the body, which causes the face ends of the leaf springs to locate in the channel section brackets. The pins are then inserted through respective brackets, securing the springs to the chassis, before the hydraulic rams are retracted leaving the unit once again resting on its wheels ready for towing.

Problems exist with the operation of such a unit, particularly concerning the removal and re-insertion of the pins in the channel sections, since the operator must reach under the body in order to insert the pins. This exposes the operator to potential danger because of the possibility of failure of the rams. Additionally, there may be problems with the unit during transport because continued vibration of the unit may cause the pins to 'work loose', resulting in collapse of the unit.

According to the invention, there is provided a transportable temporary accomodation unit comprising a box-like body structure mounted by means of elongate resilient suspension members on at least one wheeled axle, each of said suspension members being pivotally mounted at one end to the underside of said body structure, the other ends of said suspension members being movable between respective first positions in which a portion of each of said members proximate said other ends is located within respective bracket members on said underside of said body structure, and a second position in which said suspension members are located substantially entirely within said body structure, releasable locking means being provided for simultaneous engagement with each of said bracket members such that said suspension members are selectively retainable in said first position, said locking means being operable remote from said bracket members.

Preferably means is provided for selectively raising or lowering the body structure. Advantageously such means may comprise one or more hydraulically operated rams.

It is preferred that the bracket members each have opposed upstanding portions arranged to receive the portions of respective suspension members therebetween. Preferably, the releasable locking means comprises separate locking members, each arranged to be engageable with a respective bracket member. Advantageously each locking member is in the form of an elongate pin arranged to pass through complementary apertures provided in each of the upstanding portions of the bracket members.

Preferably a guide member is provided associated with each bracket member arranged to ensure correct alingment and engagement of the locking members with respective brackets.

In a first embodiment of the unit according to the invention, the locking means is operable remotely via an hydraulic circuit, in which case the locking members may advantageously be engageable with the bracket members by means of actuation of hydraulic cylinders. Advantageously each locking member may consist of or be attached to the ram of a separate hydraulic cylinder.

In a second embodiment of the unit according to the invention, the locking means is remotely operable via a linkage mechanism including an actuation member movable between a first location in which the locking members engage with respective bracket members and a second location in which the locking members are disengaged from their respective bracket members.

Preferably, in this embodiment a catch mechanism is provided for selective enagagement with the linkage mechanism, preferably with the actuation member, such that the locking members are securable in engagement with respective bracket members, when the linkage mechanism is in the first location.

The invention will now be further described in a particular embodiment, by way of example only, with reference to the accompanying drawings, in which:

Figure 1 is a schematic, partially cut-away side elevation of an accomodation unit according to the invention supported on its wheels and ready to be towed;

Figure 2 is a view similar to that of Figure 1, showing the body in partially lowered position, supported by rams and the trailing end of the body;

Figure 3 is a view similar to that of Figure 2, showing the body in fully lowered position, with the axle disengaged from the body;

Figure 4 is a schematic plan view of the accomodation unit of Figure 1;

Figure 5 is a schematic illustration of part of the accomodation unit of Figure 1;

Figure 6 is a schematic illustration showing a part of what is illustrated in Figure 1; and

Figures 7 and 8 are detail views of a part of Figure 4.

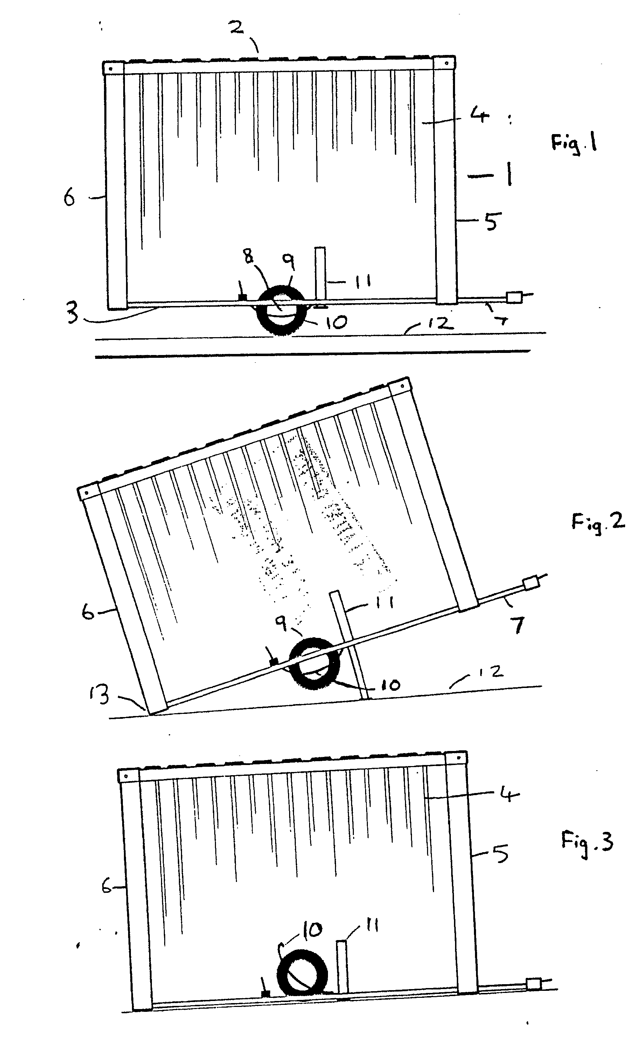

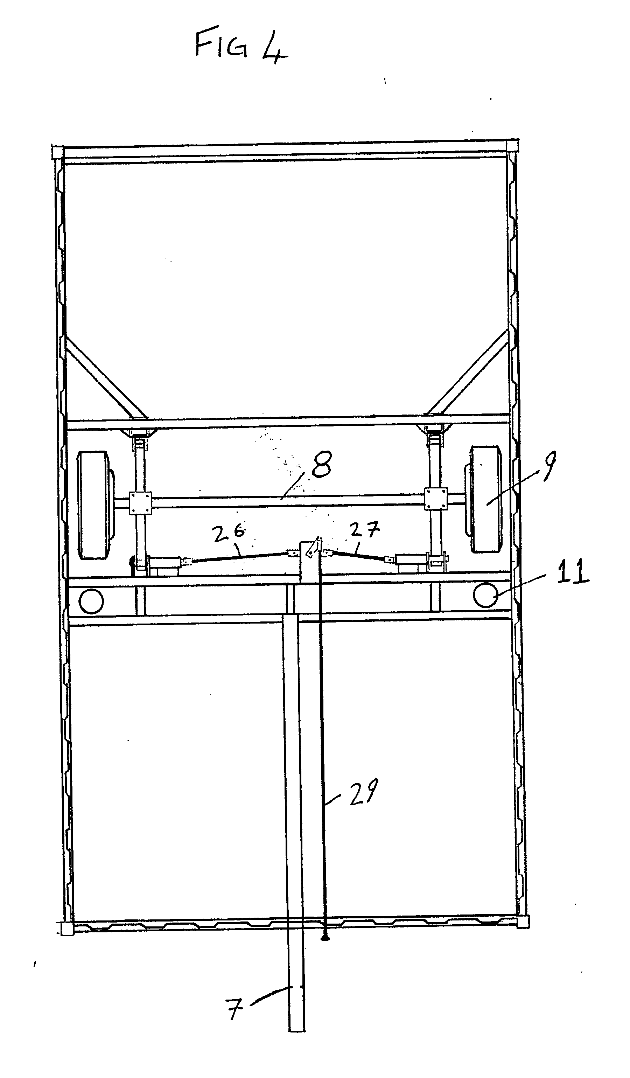

Referring to the drawings, and in particular to Figures 1 to 4, there is shown a trailer comprising a box-like body 1 having a roof 2, a base 3, sidewalls 4, front endwall 5 and rear endwall 6. Endwall 5 is provided with a towbar 7. The body 1 has an axle 8 with a pair of wheels 9, the axle and wheels being connected to the body by suspension springs 10. Body 1 can be raised or lowered using rams 11; the sequence of operations on lowering the body will now be described.

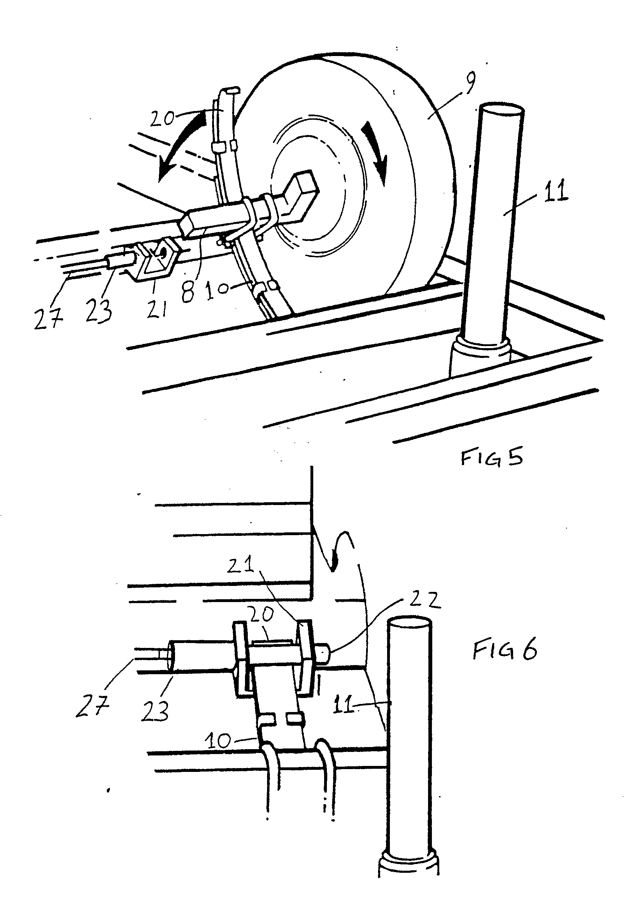

The trailer is initially in the position shown in Figure 1 (that is, supported on its wheels and ready to be towed). The rams 11 are then extended until they engage the ground; they are further extended until the lowermost portion 13 of rear endwall 6 engages the ground, as shown in Figure 2. The springs 10 are then disengaged from the body (as will be described below with reference to Figures 5 and 6) and the rams 11 are retracted to the position shown in Figure 3, such that the body is supported solely by the lower portions of sidewalls 4 and endwalls 5 and 6.

Referring now to Figures 5 and 6, one end 20 of each spring 10 is retained in a respective channel section bracket 21, welded to the underside of the body. Each spring is securely held in its channel section bracket 21 by a locking pin 22 passing through apertures in the bracket.

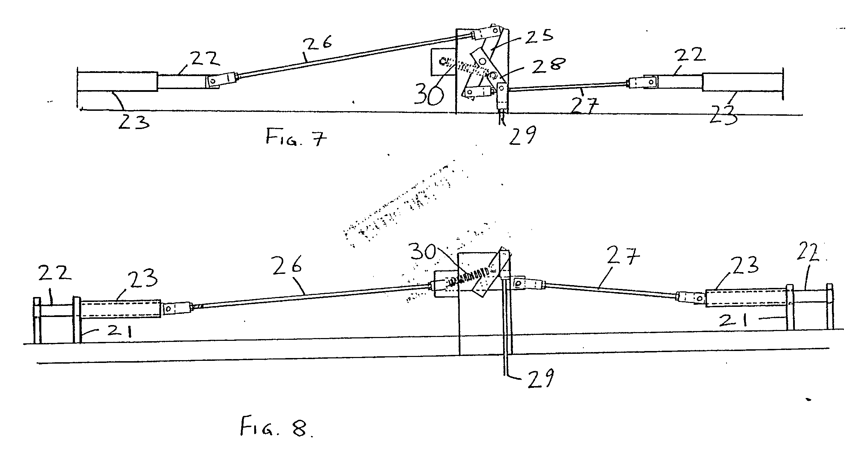

Referring also to Figures 7 and 8 the locking mechanism is shown in more detail. Each pin 22 is constrained to move along a guide tube 23 which ensures correct alignment of the pins 22 with the apertures in respective brackets. Engagement and disengagement of the pins 22 with the brackets 21 is facilitated by the operation of a linkage mechanism (generally designated 24) which includes a first rotatable arm 25 connected to push rods 26 and 27 which are themselves pivotally connected to respective locking pins 22.

A second rotatable arm 28 is connected to the first arm 25 which when rotated by means of a pivotally attached operation rod 29 causes the first arm to rotate, selectively engaging or disengaging the locking pins 22 with their respective brackets 21. A spring 30 is provided in the mechanism, so as to normally bias the mechanism into the pin/bracket engagement position.

When it is desired to lower the body, the rams 11 are engaged with the ground so as to lift the wheels 9 from the ground, the operation rod 29 is then pulled causing the mechanism to operate and the pins 22 to disengaged from their respective brackets 21. The springs 10 are thus disengaged from the body of the unit. The body 1 is then lowered to the ground using rams 11 so that the body 1 and the wheels 9 rest on the ground (Figure 3).

## Claims

1. A transportable accomodation unit comprising a box-like body structure mounted by means of elongate resilient suspension members on at least one wheeled axle, each of said suspension members being pivotally mounted at one end to the underside of said body structure, the other ends of said suspension members being movable between respective first positions in which a portion of each of said members proximate said other ends is located within respective bracket members on said underside of said body structure, and a second position in which said suspension members are located substantially entirely within said body structure, releaseable looking means being provided for simultaneous engagement with each of said bracket memberts such that said suspension members are selectively retainable in said first position, said looking means being operable remote from said bracket members.

2. A transportable accomodation unit according to claim 1, which further comprises means for selectively raising or lowering the body structure.

3. A transportable accomodation unit according to claim 2, which further comprises at least one hydraulically operable ram for selectively raising or lowering the body structure.

4. A transportable accomodation unit according to any preceding claim, wherein the bracket members each have opposed upstanding walls arranged to receive the portions of respective suspension members therebetween.

5. A transportable accomodation unit according to claim 4, wherein the releasable locking means comprises separate locking members, each arranged to be engageable with a respective bracket member, each locking member being in the form of an elongate pin arranged to pass through complementary apertures provided in the upstanding walls of the bracket members.

6. A transportable accomodation unit according to claim 5, which further comprises a guide member associated with each bracket member arranged to ensure correct alignment and engagement of the locking members with respective brackets.

7. A transportable accomodation unit according to any preceding claim, wherein the locking means is operable remotely via an hydraulic circuit.

8. A transporable accomodation unit according to claim 5, wherein each locking member is actuated by a respective hydraulic cylinder.

9. A transportable accomodation unit according to claim 5, wherein the locking means is remotely operable via a linkage mechanism including an actuation member moveable between a first location in which the locking members engage with respective bracket members and a second location in which the locking members are disengaged from their respective bracket members.

Fig.1

Fig.2

Fig.3

FIG 4

FIG 5

FIG 6

Fig. 7

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | GB-A-2 204 537   (RATCLIFFE)<br>* Whole document * | 1-6,9,7 | B 60<br>P 1/02<br>B 60 P 3/025 |
| Y | US-A-3 062 558   (KROLICKI)<br>* Column 3, lines 35-60; figure 1 * | 1-6,9,7 | |
| Y | GB-A-8 603 38   (THOMPSON TRAILER CORP.)<br>* Claims 6,13; figure 7 * | 7 | |
| A | GB-A-2 194 925   (TOMECEK)<br>* Claims 1,3,5; figures 3,5 * | 1-3,6,7,9 | |
| A | US-A-4 513 984   (WRIGHT)<br>* Claim 1; figure 1 * | 1 | |

|  | TECHNICAL FIELDS SEARCHED (Int. Cl.5) |
|---|---|
|  | B 60 P<br>B 60 P<br>B 62 D |

The present search report has been drawn up for all claims

| Place of search | Date of completion of search | Examiner |
|---|---|---|
| The Hague | 18 March 91 | NORDLUND J.O. |